# DEMANDE DE BREVET EUROPEEN

(11) **EP 4 230 301 A1**
(43) Date de publication de la demande: **23.08.2023**
(21) Numéro de dépôt: 23154965.0
(22) Date de dépôt: 03.02.2023
(51) Int. Cl.: B05B 1/34

(54) **BUSE DE PULVERISATION A JET CONIQUE**

(30) Priorité: 16.02.2022 FR 2201365
(71) Demandeur: Solcera, 27000 Evreux (FR)
(72) Inventeur: FOUBERT, Hervé, 27000 Evreux (FR)
(74) Mandataire: Cabinet Netter

(57) **Abrégé**

Une buse de pulvérisation (1) à jet conique comprend un corps (2), de forme généralement axisymétrique, avec une zone d'entrée (11) pour du liquide et une sortie (12), et un noyau (3), au moins partiellement logé dans le corps (2). Le noyau (3) est agencé de manière à mélanger le liquide qui le traverse avec de l'air, en amont de la sortie (12). La buse (1) comprend en outre une pièce additionnelle (5), disposée en aval de la face d'entrée (11) et en amont du noyau (3). Cette pièce additionnelle (5) est agencée de manière à mettre un jet de liquide en giration autour de l'axe (XX') du corps (2).

## Description

L'invention concerne une buse de pulvérisation, en particulier à usage agricole.

Dans ce domaine, on utilise, notamment à des fins d'épandage, des pulvérisateurs comprenant une ou plusieurs rampes, ou atomiseurs, qui peuvent être équipées chacune de plusieurs dizaines de buses. Ces buses sont destinées à travailler simultanément, à des pressions comprises entre 3 et 20 bar.

Chaque buse, aussi appelée "injecteur" dans la technique, est conçue de manière à projeter un jet de gouttes généralement conique, capable de produire sur un plan perpendiculaire à la direction de projection un anneau circulaire de pulvérisation (on parle de "cône creux") ou un disque (surface pleine au contour circulaire, on parle alors de "cône plein").

Dans ce contexte, on recherche une pulvérisation efficace, qui se traduit, pour ce qui concerne les buses, par un spectre de gouttes cible, un débit calibré à une pression de fonctionnement nominale et un angle de jet spécifique (angle au sommet du cône formé par le jet en sortie de buse). Le spectre de gouttes correspond à la répartition des gouttes issues de la pulvérisation selon leur taille.

Les buses sont conçues de manière telle que le fluide, un fois son débit calibré, traverse une chambre de décompression où il se mélange à de l'air. Le mélange air-liquide est réalisé à l'intérieur d'une pièce à effet Venturi, que l'on appelle "couvercle" ou encore "noyau" dans la technique, et qui fonctionne, le plus souvent, par effet Venturi.

La conception d'une buse de pulvérisation doit permettre de maîtriser la taille des gouttes du jet de sortie. Dans le cadre d'une application agricole, la référence est la normalisation ASABE S 572.1. Les classes de taille de gouttes vont d'une dénomination "très fines" (catégorie "VF") à "ultra grosses" (catégorie "UC"). L'invention s'intéresse à la production de gouttes à partir de "moyennes" (catégorie "M)" et au-delà. La conception doit en outre respecter un angle de jet cible et autoriser le maintien de l'amorçage pour des pressions notamment supérieures à 6 bar.

Pour calibrer le débit du fluide qui traverse la buse, on agence cette dernière de manière que le fluide traverse, en entrée de buse, ou au voisinage de celle-ci, un orifice de taille adaptée à ce débit. Le plus souvent, cet orifice de calibration est ménagé à travers d'une pièce en forme de disque, que l'on appelle "pastille" dans la technique. On parle ainsi de "pastille de calibration".

Pour des débits faibles, on prévoit des pastilles dont l'orifice de calibration est relativement étroit, et inversement.

Pour éviter qu'à l'usage, la buse se bouche intempestivement, ou du moins réduire ce risque, on filtre généralement le fluide en amont de la buse. On utilise des filtres qui présentent des mailles dont la taille correspond à celle des orifices de calibration, par valeurs inférieures.

Par exemple, on a l'habitude d'utiliser, pour les buses à plus petits débits (gamme de débits ISO comprise entre 0050 et 0075), des filtres à maille très fine, entre 100 mesh et 200 mesh. Du fait de leur maille très fine, ces filtres sont particulièrement sensibles au bouchage.

Dit autrement, on réduit le risque de bouchage des buses en reportant ce risque sur les filtres disposés en amont. Cependant, lorsqu'un filtre est bouché, la buse située en aval n'est plus fonctionnelle.

L'invention vise à améliorer la situation, et en particulier à réduire globalement le risque de bouchage des ensembles filtre-buse.

Le risque de bouchage des filtres ou des buses est particulièrement présent dans le domaine agricole, du fait que le produit à pulvériser se trouve généralement sous forme d'une suspension, plus ou moins concentrée. Cependant, l'invention n'a pas vocation à être limitée à ce domaine. L'invention s'applique au contraire à tout domaine où l'on utilise des buses de pulvérisation, à cône creux ou plein, et où un risque de bouchage de ces buses existe, même si, le cas échéant, ce risque se révèle moindre que dans le domaine agricole. L'invention s'applique également dans des domaines où les buses sont utilisées en environnement clos ou contrôlé. De manière non limitative, l'invention trouve à s'appliquer aussi dans l'agro-alimentaire et l'industrie, en particulier dans le domaine de la protection des surfaces.

Cependant, n'entrent pas dans le cadre de l'invention les systèmes ayant pour seul but d'utiliser des buses à cône creux standard pour calibrer un débit au sein d'un système associant un apport d'air par convection naturelle forcée.

On propose une buse de pulvérisation à jet conique, du type comprenant un corps, de forme généralement axisymétrique, avec une zone d'entrée pour du liquide et une sortie, et un noyau, au moins partiellement logé dans le corps, agencé de manière à mélanger le liquide qui le traverse avec de l'air, en amont de la sortie. La buse comprend en outre une pièce additionnelle, disposée en aval de la face d'entrée et en amont du noyau. Cette pièce additionnelle est agencée de manière à mettre un jet de liquide en giration autour de l'axe du corps.

La pièce additionnelle, que l'on peut appeler "hélice", ou encore "swirl", de son équivalent en anglais, est agencée, et en particulier, dimensionnée, de manière à calibrer le liquide qui traverse la buse.

La buse proposée présente un risque de bouchage réduit par rapport aux buses classiques, notamment celles comprenant une pastille de calibration en amont du noyau, éventuellement complétées, en aval, d'un tampon, d'un divergent et/ou d'un disque de décharge. Du fait de ce risque réduit, la buse proposée peut être associée à un filtre plus grossier que les buses classiques, réduisant ainsi le risque de bouchage de l'ensemble buse et filtre. Cette association est particulièrement pertinente pour des buses destinées à travailler dans les gammes de débits ISO compris entre 0050 à 02.

Contrairement aux buses classiques, la buse proposée ne reproduit pas le principe d'une calibration du débit au moyen d'une pastille ou, plus généralement, du passage du fluide au travers d'un orifice de calibration. En remplacement, la buse proposée utilise une pièce à effet de giration.

Des caractéristiques optionnelles de l'invention, complémentaires ou de substitution, sont énoncées ci-après.

La pièce additionnelle comprend une chambre, présentant une forme de révolution, et au moins un canal d'admission pour du liquide, chaque canal d'admission débouchant dans la chambre de manière tangentielle.

La pièce additionnelle comprend en outre un conduit de décharge, dans lequel débouche la chambre de manière axiale, et ce conduit de décharge présente des dimensions en section transversale supérieures chacune aux dimensions en section transversale de chacun des canaux d'admission.

Chaque canal d'admission de la pièce additionnelle présente des dimensions en section transversale supérieures chacune au diamètre d'une pastille de calibration de débit équivalent.

Chaque canal d'admission de la pièce additionnelle présente en section transversale une dimension minimale, et cette dimension minimale est supérieure au diamètre de la pastille de calibration de débit équivalent, de dix pour cent au moins.

Le noyau présente une chambre de décompression, capable de mélanger un jet de liquide à de l'air ambient, et au moins un conduit d'admission pour le liquide, qui débouche dans cette chambre de décompression. Le noyau est disposé relativement à la pièce additionnelle de telle manière que le conduit d'admission de ce noyau soit coaxial à une sortie de la pièce additionnelle.

Le conduit d'admission du noyau présente des dimensions en section transversale inférieures à celles de la chambre de décompression.

Le conduit d'admission du noyau présente des dimensions en section transversale supérieures à celles de la sortie de la pièce additionnelle.

Les dimensions de la section transversale du conduit d'admission du noyau et une longueur de ce conduit sont choisies conjointement de manière à maintenir un angle de jet en sortie proche de 30 degrés.

Le noyau comprend en outre une conduite de sortie, qui s'évase à la manière d'une tuyère le long de l'axe du corps. Cette conduite de sortie est dimensionnée de manière à augmenter l'évasement du fluide.

La buse est dépourvue de pièce à fonction de canaliser une vitesse tangentielle du liquide, au moins en aval du noyau. La buse comprend en outre une pièce de décharge, logée dans le corps, en aval du noyau et en amont de la sortie.

La pièce de décharge comprend une chambre allongée. Cette chambre présente des dimensions en section transversale et une longueur adaptées en fonction d'un angle de jet souhaité à la sortie.

La buse comprend en outre une seconde pièce additionnelle, à fonction de canaliser une vitesse tangentielle du fluide dans le jet. La seconde pièce additionnelle est logée dans le corps, en aval du noyau.

La buse comprend en outre une pièce de décharge en forme de disque, en aval de ladite seconde pièce additionnelle. Cette pièce de décharge est logée dans le corps de manière qu'un espace soit ménagé, dans ledit corps, entre la seconde pièce additionnelle et le disque de décharge.

L'espace s'étend sur une distance suivant l'axe du corps voisine de 1 millimètre.

La buse est dépourvue de pièce de décharge et de pièce à effet de canaliser une vitesse tangentielle du fluide dans le jet. Le noyau comprend une partie formant tuyère. Les dimensions de cette tuyère sont adaptées de manière à produire en sortie un jet conique dont l'angle au sommet est compris entre 15 et 40 degrés.

D'autres caractéristiques et avantages de l'invention apparaîtront à la lecture de la description détaillée ci-après, faite en relation avec les dessins, sur lesquels :
- la figure 1 représente un éclaté d'une buse selon l'invention en éclaté, vu en perspective ;
- la figure 2 représente l'éclaté de la figure 1 vu de face ;
- la figure 3 représente l'éclaté de la figure 1 vu de côté ;
- la figure 4 représente la buse de la figure 1 montée, en vue de face ;
- la figure 5 représente la buse de la figure 4, en coupe selon une ligne V-V ;
- la figure 6 représente la buse de la figure 5, en coupe selon une ligne VI-VI ;
- la figure 7 représente la buse de la figure 4, en vue de dessus ;
- la figure 8 représente la buse de la figure 5, en perspective ;
- la figure 9 représente une pièce formant hélice pour la buse de la figure 1, en vue de dessus ;
- la figure 10 représente une pièce formant divergent pour la buse de la figure 1, vue en perspective ;
- la figure 11 représente la pièce de la figure 10 en vue de dessous ;
- la figure 12 représente la pièce de la figure 10 en vue de côté ;
- la figure 13 représente la pièce de la figure 10, vue en perspective ;
- la figure 14 représente l'hélice de la figure 9 en vue de face ;
- la figure 15 représente une pièce formant couvercle pour la buse de la figure 1 en coupe axiale ;
- la figure 16 est analogue à la figure 1 pour une variante de buse selon l'invention ;
- la figure 17 est analogue à la figure 2 pour la variante de la figure 14 ;
- la figure 18 est analogue à la figure 3 pour la variante de la figure 14 ;
- la figure 19 est analogue à la figure 1 pour une autre variante de buse selon l'invention ;
- la figure 20 représente la variante de la figure 19, en éclaté et en coupe longitudinale ;
- la figure 21 représente la variante de la figure 19, en éclaté et selon une autre coupe longitudinale ;
- la figure 22 représente la variante de la figure 19, assemblée et en coupe longitudinale ;
- la figure 23 représente la variante de la figure 19, assemblée et selon une autre coupe longitudinale ;
- la figure 24 est analogue à la figure 1 pour une autre variante encore de la buse selon l'invention ;
- la figure 25 est analogue à la figure 2 pour la variante de la figure 24 ;
- la figure 26 représente la variante de la figure 24, éclatée et en coupe longitudinale ;
- la figure 27 est analogue à la figure 1 pour une autre variante encore de la buse selon l'invention ;
- la figure 28 représente la variante de la figure 27, assemblée et en coupe longitudinale ;
- la figure 29 est analogue à la figure 28, selon une autre coupe longitudinale.

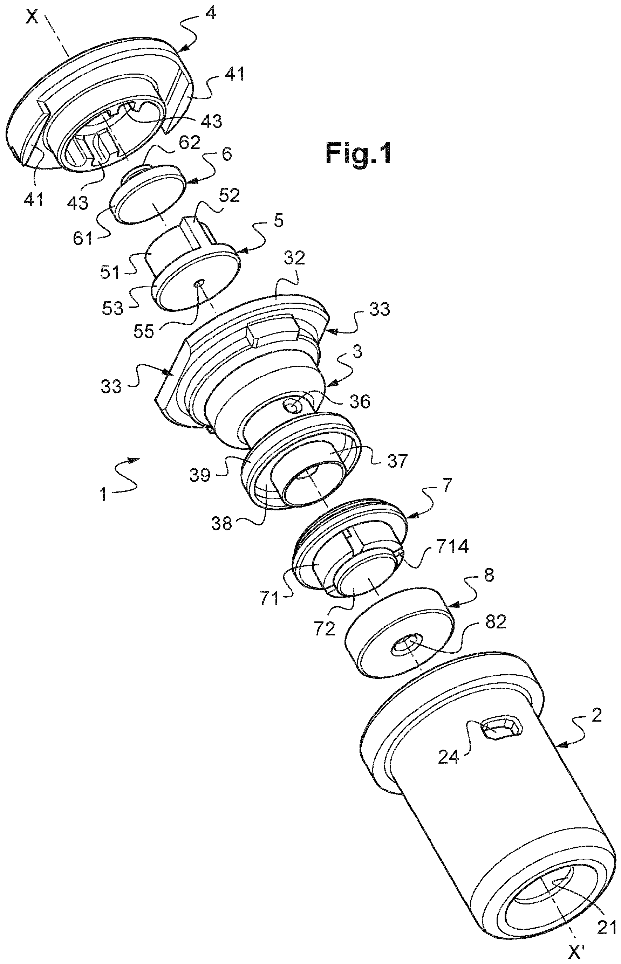

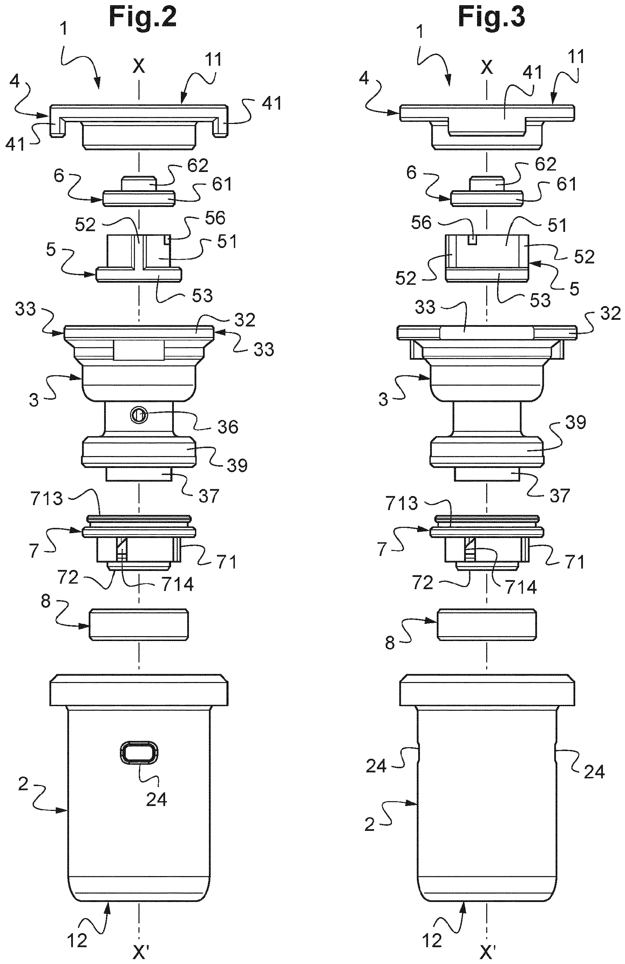

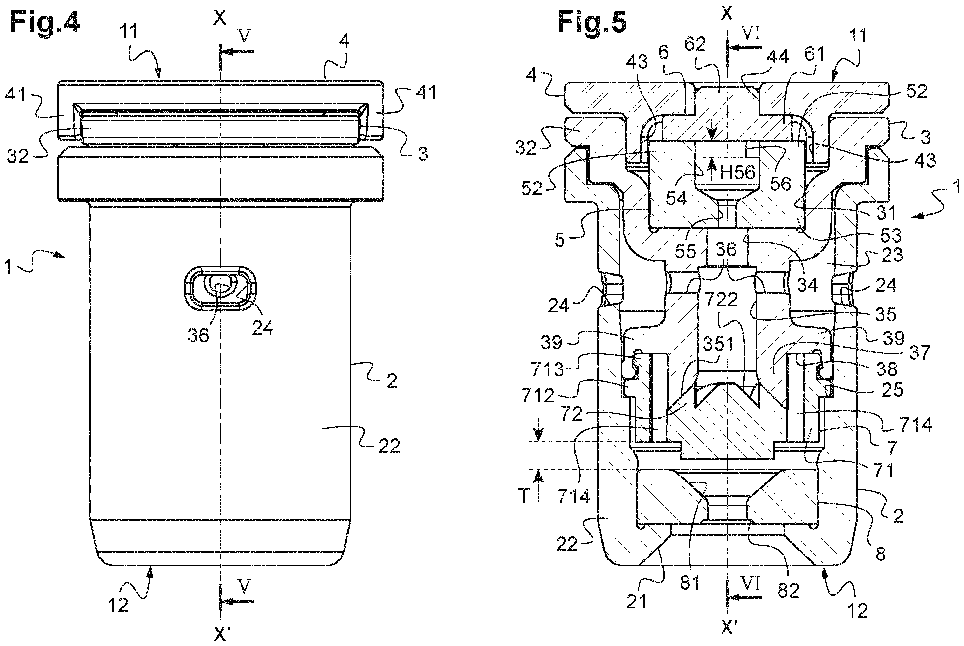

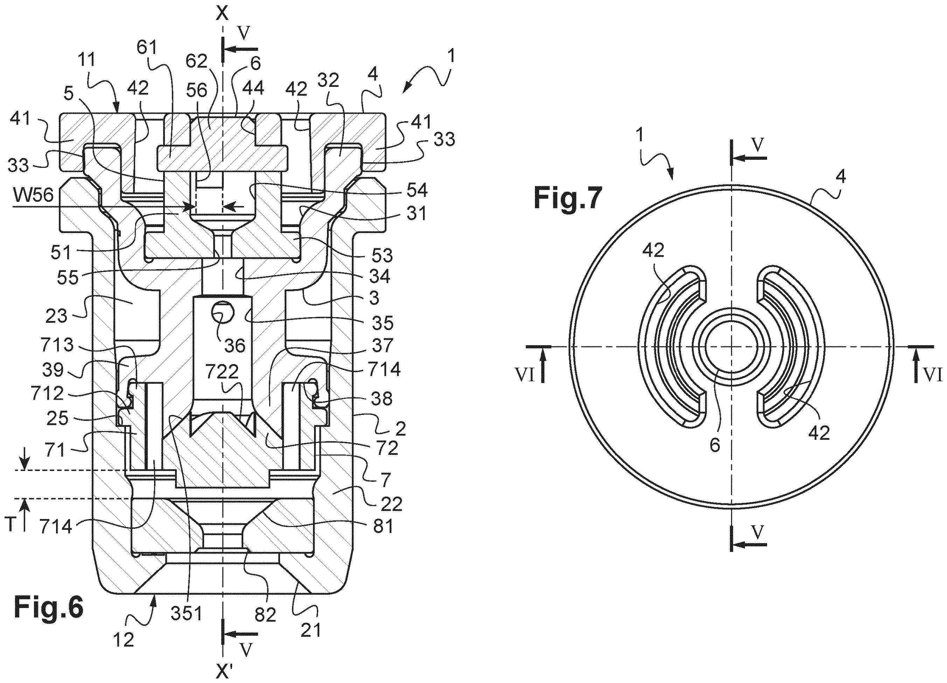

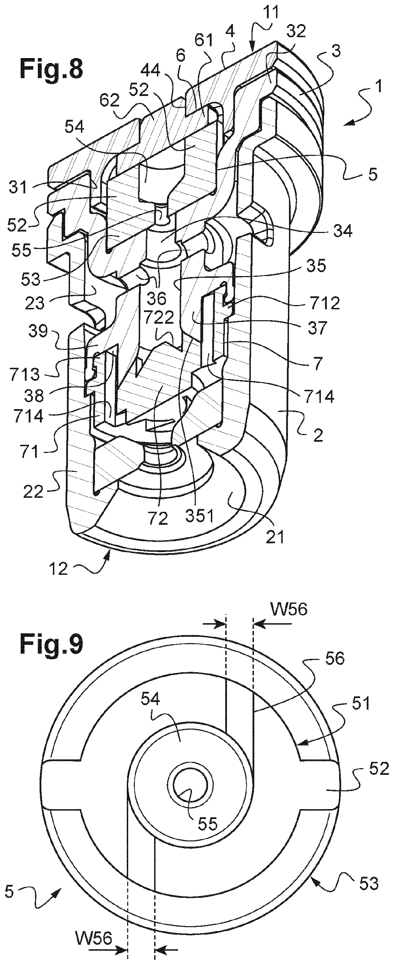

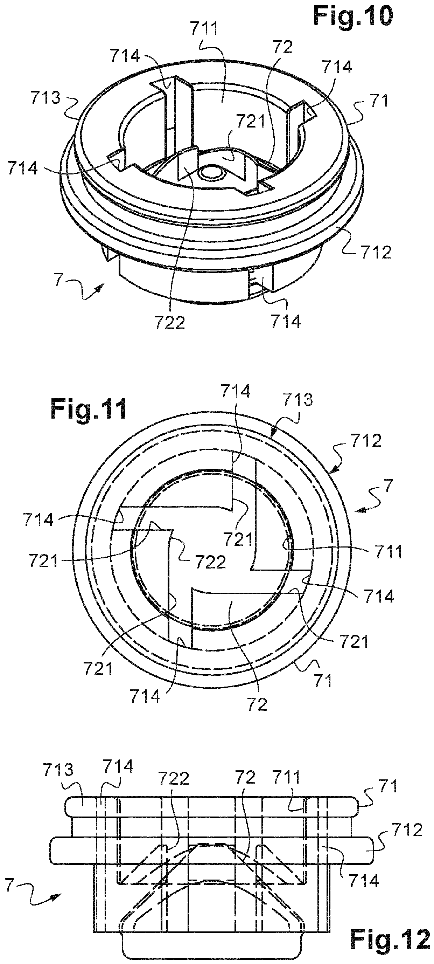

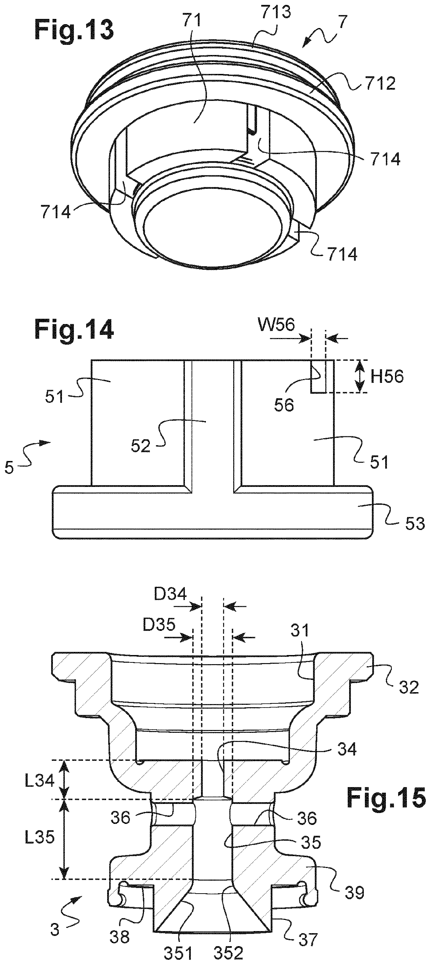

On fait référence aux figures, de la figure 1 à la figure 15.

Une buse de pulvérisation 1 présente une face d'entrée 11 au travers de laquelle pénètre un fluide à pulvériser et une face de sortie 12 par laquelle le fluide est éjecté de la buse 1. La buse 1 présente une allure générale axisymétrique, ici de révolution. L'axe de symétrie ou de révolution est référencé XX' sur les figures. La face d'entrée 11 et la face de sortie 12 de la buse 1 sont mutuellement opposées selon la direction de l'axe XX' de la buse 1.

La buse 1 est agencée de manière à travailler dans une plage spécifique de débits, notamment une plage définie par la norme ISO 10625. Par exemple, la buse 1 est conçue pour travailler dans la plage ISO "01", soit un débit de 400 centimètres cube par minute.

Dans ce qui suit, les termes "amont" et "aval" se rapportent à une direction générale d'écoulement du fluide à l'intérieur de la buse 1 : selon l'axe XX' de cette buse 1, de la face d'entrée 11 à la face de sortie 12.

La buse 1 comprend un corps 2 en forme d'étui ou de douille. Le corps 2 présente une allure en forme générale de cylindre droit, délimité par une face amont et une face aval mutuellement opposées selon l'axe du corps 2. La face aval du corps 2 correspond à la face de sortie 12 de la buse 1.

Le corps 2 présente un orifice de sortie 21, qui débouche sur la face de sortie 12 et correspond à la sortie de la buse 1. Le fluide à pulvériser sort de la buse 1 par l'orifice de sortie 21 du corps 2. Le corps 2 présente une paroi périphérique 22 qui entoure un espace intérieur 23. Cet espace intérieur 23 loge l'essentiel des éléments de la buse 1.

La buse 1 comprend en outre une pièce formant couvercle 3, d'allure générale de révolution, avec une face amont et une face aval mutuellement opposées selon l'axe du couvercle 3. Le couvercle 3 se monte sur le corps 2 de manière à se loger dans l'espace intérieur 23 du corps 2. La face aval du couvercle 3 se trouve alors à l'intérieur de cet espace intérieur 23, tandis que sa face amont dépasse de la face amont du corps 2, dans la direction axiale de la buse 1.

Le couvercle 3 ferme l'espace intérieur 23 du corps 2. Le couvercle 3 comprend un large espace ouvert sur sa face amont et qui forme une cuvette 31, et un collet 32 qui borde la cuvette 31 au niveau de la face aval du couvercle 3. À l'état monté, le collet 32 du couvercle 3 dépasse de la face amont du corps 2. Le collet 32 est généralement circulaire, à l'exception d'une paire de méplats 33 disposés symétriquement par rapport à l'axe du couvercle 3.

Le couvercle 3, parfois désigné "venturi" ou encore "noyau" dans la technique, est agencé de manière telle que le jet de fluide qui le traverse se charge d'air (mélange), cet air étant généralement aspiré par effet Venturi.

La buse 1 comprend encore une pièce formant sur-couvercle 4, d'allure générale de révolution, avec une face amont et une face aval mutuellement opposées selon l'axe du sur-couvercle 4. La face amont du sur-couvercle 4 correspond à la face d'entrée 11 de la buse 1. Le sur-couvercle 4 se monte sur le couvercle 3, de manière telle que sa face aval se trouve partiellement à l'intérieur de la cuvette 31 du couvercle 3 et sa face amont fasse saillie de la face amont du couvercle 3. Le sur-couvercle 4 ferme la cuvette du couvercle 3 du coté amont de celle-ci. Sur sa face aval, le sur-couvercle 4 présente une paire de pattes de fixation 41, qui s'étendent axialement et viennent en prise avec le collet 32 du couvercle 3, sur les méplats 33 de ce dernier. Les pattes 41 et les méplats 33 coopèrent grâce à leur forme de manière à clipper le sur-couvercle 4 sur le couvercle 3. Les pattes 41 s'étendent parallèlement l'une à l'autre et sont conformées ici en des surépaisseurs du sur-couvercle 4.

Le sur-couvercle 4 comprend en outre une paire d'orifices 42 ouverts sur sa face amont et qui débouchent chacun sur la face aval du sur-couvercle 4. Le fluide à pulvériser pénètre dans la buse 1 au travers de ces orifices 42. Les orifices 42 sont conformés en symétrie mutuelle par rapport à l'axe de la buse. Les orifices 42 s'étendent parallèlement à l'axe du sur-couvercle 4. Ces orifices 42 présentent chacun un profil transversal oblong, ici en forme de segment angulaire d'une couronne circulaire.

La buse 1 comprend en outre une pièce à effet de produire un jet de liquide en giration, ou hélice 5. L'hélice 5 est en outre agencée de manière à calibrer le jet de fluide dans la buse 1. L'hélice 5 présente une allure générale de révolution, avec une face amont et une face aval mutuellement opposées selon l'axe de l'hélice 5.

L'hélice 5 se monte sur le couvercle 3, de manière telle que l'hélice 5 soit logée dans la cuvette 31 du couvercle 3, en aval du sur-couvercle 4 et en amont du couvercle 3. La face aval de l'hélice 5 se trouve alors à proximité du fond de la cuvette 31, sa face amont en retrait du collet 32.

L'hélice 5 présente une surface extérieure avec un premier segment axial 51 en forme de cylindre droit, qui s'étend depuis sa face amont et en direction de sa face aval. Sur ce premier segment 51, l'hélice 5 présente un diamètre extérieur inférieur au diamètre interne de la cuvette 31, en sorte qu'un premier espace, sensiblement annulaire, est ménagé à l'intérieur de la buse 1, en périphérie de l'hélice 5, et délimité par la paroi 22 du corps 2.

L'hélice 5 présente une paire de nervures 52 qui fait saillie radialement de la surface externe de l'hélice 5. Les nervures 52 s'étendent de manière rectiligne, parallèlement à l'axe de l'hélice 5, sur le premier segment 51 de la surface externe de l'hélice 5. Les nervures 52 sont disposées de manière axialement symétrique l'une de l'autre. Les nervures 52 partagent l'espace annulaire situé entre hélice 5 et la cuvette 31 en deux secteurs analogues l'un à l'autre.

Le sur-couvercle 4 présente une paire de rainures 43, en correspondance de forme avec les nervures 52 de l'hélice 5. Les nervures 52 et les rainures 43 coopèrent de manière à positionner l'hélice 5 relativement au sur-couvercle 4, d'une manière telle que les orifices 42 du sur-couvercle 4 débouchent dans l'espace en question, chacun dans un secteur respectif. À l'état monté, les rainures 43 du sur-couvercle 4 sont perpendiculaires aux orifices 42 afin de détromper ces orifices 42 par rapport aux secteurs angulaires de l'espace annulaire.

La surface externe de l'hélice 5 présente un second segment axial 53, en forme de cylindre droit, qui s'étend depuis le premier segment 51 jusqu'à sa face aval. Sur ce second segment 53, l'hélice 5 présente un diamètre extérieur égal, à un éventuel jeu de montage près, au diamètre interne de la cuvette 31, en sorte que l'hélice 5 se trouve positionnée relativement au couvercle 3 par l'intermédiaire de ce second segment axial 53.

Intérieurement, l'hélice 5 est percée d'un conduit central qui s'étend de manière sensiblement rectiligne suivant l'axe de l'hélice 5, de la face amont de celle-ci à sa face aval. Ce conduit présente un premier segment axial, côté amont, généralement cylindrique et de grand diamètre, qui forme la chambre 54 de l'hélice 5. Côté aval, le conduit central présente un second segment généralement cylindrique et de plus petit diamètre, qui forme le conduit de décharge 55 de l'hélice 5. La chambre 54 et l'orifice de décharge 55 sont raccordés l'un à l'autre par un segment intercalaire du conduit, généralement tronconique (non référencé).

L'hélice 5 est également percée d'une paire de canaux d'admission 56 pour le fluide à pulvériser, chacun reliant en communication fluidique la chambre 54 et un secteur respectif de l'espace annulaire entre la paroi 22 du corps 2 et la périphérie de l'hélice 5. Les canaux d'admission 56 de l'hélice 5 s'étendent dans un plan perpendiculaire à l'axe de l'hélice 5, de manière rectiligne, et débouchent chacun dans la chambre 54 de manière tangentielle. Ces canaux 56 présentent une section transversale rectangulaire, dont une hauteur H56 correspond à l'étendue de cette section selon l'axe de l'hélice 5 et une largeur W56 à l'étendue selon une direction transversale. Ici, les canaux 56 sont ouverts par le dessus sur la face amont de l'hélice 5. Les canaux 56 peuvent être plus ou moins inclinés relativement à l'axe XX' de l'hélice 5. Le débit du fluide est calibré par l'adaptation des dimensions, en section transversale, des canaux d'admission 56 et du conduit de décharge 55 de l'hélice 5.

Un jet de fluide qui pénètre dans l'hélice 5 par ses canaux 56 débouche dans sa chambre 54 où il est mis en giration autour de l'axe de l'hélice 5. De la chambre 54, le jet gagne le conduit de décharge 55 et quitte l'hélice 5. Du fait de cette conformation de l'hélice 5, le jet qui sort de l'hélice 5 présente une allure conique dont l'angle au sommet peut être compris entre 50 et 90 degrés. L'angle au sommet visé en sortie de la buse 1 est généralement compris entre 40 et 100 degrés.

Les caractéristiques du jet de fluide qui quitte l'hélice 5 par son conduit de décharge 55 dépendent de l'agencement interne de l'hélice 5, en particulier la forme et les dimensions des canaux d'admission 56 et du conduit de décharge 55.

Ici, on s'intéresse peu à l'angle au sommet du jet en sortie de l'hélice 5 : le rôle de cette l'hélice 5 consiste ici à calibrer le débit de fluide à travers la buse 1 et à conférer au jet de fluide un mouvement de giration. Les dimensions des canaux d'admission 56, en section, sont proches les unes des autres et maximisées de manière à autoriser une filtration minimale en amont de la buse 1, sans augmenter le risque de bouchage dans la buse 1. L'angle au sommet du jet conique quittant l'hélice 5 importe peu, comme la taille des gouttes ou la vitesse du fluide. Les caractéristiques du jet obtenu à la sortie de la buse 1 sont adaptées par les pièces de cette buse 1 disposées en aval de l'hélice 5.

La buse 1 comprend en outre un tampon 6 d'allure générale de révolution, avec une face amont et une face aval mutuellement opposées selon l'axe du tampon 6. Le tampon 6 présente une portion principale sous la forme d'un disque plein 61, dont une face correspond à la face aval du tampon 6, et une portion secondaire 62, généralement cylindrique, qui se raccorde au disque plein 61 sur une face de celui-ci opposée à la face aval et se termine sur la face amont du tampon 6. Le tampon 6 se monte sur le sur-couvercle 4. La portion secondaire du tampon 6 est reçue dans un alésage 44 du sur-couvercle 4, ouvert sur la face aval de ce dernier. Le tampon 6 est solidaire du sur-couvercle 4, en sorte que le démontage de ce dernier du corps 2 s'accompagne du retrait du tampon 6. Cela facilite le nettoyage de la buse 1.

À l'état monté, la face aval du tampon 6 vient en contact avec la face amont de l'hélice 5. Le diamètre du disque plein 61 est supérieur au diamètre extérieur du premier segment 51 de l'hélice 5, au moins à proximité de la face amont de l'hélice 5. Le tampon 6 vient fermer les canaux 56.

Intérieurement, le couvercle 3 est traversé d'un conduit central qui s'étend, de manière rectiligne, suivant l'axe du couvercle 3, de la face amont du couvercle 3 à la face aval de ce dernier. Ce conduit comprend un premier segment, ou conduit d'entrée 34, qui s'étend depuis la face amont de ce couvercle 3. Le conduit d'entrée 34 débouche au fond de la cuvette 31. Ce conduit 34 présente un profil circulaire. On note D34 la valeur de son diamètre et L34 sa longueur.

Le conduit central du couvercle 3 comprend encore un second segment, dans le prolongement du conduit d'entrée 34, qui forme une chambre de décompression 35, où le jet de fluide est mis à la pression atmosphérique.

Cette chambre de décompression 35 présente une section transversale circulaire, dont le diamètre D35 est sensiblement supérieur à celui du conduit d'admission 34, et une longueur que l'on note L35. Le diamètre D35 de la chambre de décompression 35 et sa longueur L35 sont choisis l'un en fonction de l'autre, de sorte qu'un rapport de ce diamètre D35 sur cette longueur L35 soit supérieur à 1 et inférieur à 4. La valeur de ce rapport est telle que le jet qui pénètre dans le couvercle 3 au travers du conduit d'entrée 34 entre en contact avec une longueur de paroi suffisante dans la chambre de décompression 35 pour créer une dépression en aval.

Le couvercle 3 présente en outre une paire de conduits d'admission 36 pour de l'air, chacun reliant l'extérieur du couvercle 3 à la chambre de décompression 35, à proximité de là où débouche le conduit d'entrée 34. Les conduits d'admission 36 s'étendent radialement. À l'état monté, les conduits d'admission 36 mettent en communication fluidique l'espace intérieur 23 du corps 2 avec la chambre de décompression 35. En regard de chacun des conduits d'admission 36, la paroi périphérique 22 du corps 2 est percée d'un orifice 24 qui met en communication fluidique l'extérieur du corps 2 avec son espace interne 23. Les orifices 24 ménagés dans la paroi périphérique 22 du corps 2. L'espace interne 23 de ce corps 2 et les conduits admission 36 coopèrent de manière que de l'air puisse être acheminé de l'extérieur de la buse 1 à l'intérieur de la chambre de décompression 35.

Le conduit central du couvercle 3 comprend encore une troisième section en forme de tuyère 351, qui prolonge la chambre 35. La tuyère 351 présente une allure tronconique, qui s'évase depuis la chambre de décompression 35 à la face aval du couvercle 3.

Les conduits d'admission 36 débouchent dans la chambre de décompression 35, au voisinage de l'extrémité de celle-ci proche du conduit d'entrée 34. Ces conduits d'admission 36 débouchent dans le conduit du couvercle 3 en un lieu éloigné de la face amont de ce couvercle, séparé de cette face par le conduit d'entrée 34.

Dans le mode de réalisation des figures 1 à 15 notamment, la buse 1 comprend encore une pièce à fonction de canaliser la vitesse tangentielle du fluide qui le traverse, ou divergent 7, d'allure générale de révolution, avec une face amont et une face aval mutuellement opposées selon l'axe du divergent 7.

Le divergent 7 comprend une portion externe 71, en forme générale de cylindre droit, et une portion en forme de noyau 72, à l'intérieur de la portion externe 71.

La portion externe 71 présente une large ouverture 711 sur la face amont du divergent 7, ici de forme généralement cylindrique. Le noyau 72 présente une allure tronconique. Le noyau 72 se trouve au fond de l'ouverture de la portion externe 71, de manière telle que son sommet soit dirigé vers l'amont du divergent 7.

Extérieurement, la portion externe 71 du divergent 7 comprend un tronçon axial conformé en un épaulement 712, et un autre tronçon axial, qui borde l'ouverture 711, conformé en une collerette externe 713. La collerette 713 présente une surface terminale plane, perpendiculaire à l'axe du divergent 7, qui correspond à la face amont du divergent 7.

Le divergent 7 comporte des rainures d'un premier type, ou premières rainures 714, ménagées radialement et qui s'étendent selon l'axe du divergent 7, ici de sa face amont à sa face aval. Les premières rainures 714 débouchent à la fois sur la face amont du divergent 7 et sa face aval. Les premières rainures 714 sont ouvertes sur l'ouverture 711 de la portion externe 71 et sur l'extérieur de celle-ci, au moins sur une portion axiale de cette portion externe 71 qui se trouve en amont de l'épaulement 712.

Le divergent 7 comporte encore des rainures d'un second type, ou secondes rainures 721, ménagées axialement sur la portion tronconique du noyau 72 et qui s'étendent tangentiellement à cette portion. Chacune de ces secondes rainures 721 débouche dans une zone centrale 722 du noyau 72, évidée, d'une part, et, d'autre part, dans une première rainure 714 respective. Ici, cette zone centrale 722 présente un fond tronconique.

À chaque fois, une première rainure 714 et une seconde rainure 721 respective forment un passage qui mène de la zone centrale 722 du noyau 72 à la face aval du divergent 7.

Extérieurement, le couvercle 3 se termine, à proximité de sa face aval, par un segment cylindrique 37. La tuyère 351 est ménagée dans ce segment terminal 37. Sur sa face aval, le couvercle 3 présente une surface d'appui 38, perpendiculaire à l'axe du couvercle 3 et en forme de couronne circulaire. Le segment terminal 37 fait saillie de la surface d'appui 38. La surface d'appui 38 entoure le segment terminal 37. Sur sa face aval, le couvercle 3 comporte encore une collerette 39 qui entoure la surface d'appui 38 et fait saillie de cette dernière. La collette 39 comporte intérieurement une pluralité d'ergots (non référencés).

À l'état monté, la surface terminale plane de la collerette 713 vient s'appuyer contre une surface homologue constituée par la surface d'appui 38 du couvercle 3. Cette coopération évite la formation d'interstices et diminue le risque de fuites entre le couvercle 3 et le divergent 7. La collerette 39 du couvercle 3 vient en prise avec la collerette externe 713 du divergent 7 pour assembler le couvercle 3 et le divergent 7 ensemble. Le corps 2 de la buse 1 comprend une surface formant épaulement 25 en saillie dans l'espace interne 23 du corps 2. Le divergent 7 vient s'appuyer contre l'épaulement 25 par l'intermédiaire d'une face aval de sa collerette 713.

La portion tronconique du noyau 72 du divergent 7 est conformée en correspondance de la tuyère 351 du couvercle 3. Une fois le couvercle 3 assemblé au divergent 7, la tuyère 351 coopère avec le noyau 72 de telle sorte que le fluide qui quitte la tuyère 351 se trouve contraint d'emprunter les passages conjointement formés par les premières rainures 714 et les secondes rainures 721 du divergent 7. La zone centrale 722 du noyau 72 du divergent 7 se trouve en regard de la chambre de décompression 35, là où cette chambre débouche dans la tuyère 351.

Ici, le divergent 7 est réalisé de manière monobloc. En variante, le divergent 7 est réalisé en deux pièces au moins, l'une correspondant à la portion externe 71, l'autre au noyau 72.

La buse 1 comprend encore une pièce de type pastille de convergence, aussi appelée disque de décharge 8. Le disque 8 présente une face amont et une face aval. Le disque 8 est traversé par un conduit qui s'étend de manière rectiligne suivant l'axe du disque 8. Ce conduit présente une première section axiale ouverte sur la face amont, ou orifice d'entrée 81, généralement tronconique et qui se rétrécie depuis la face amont du disque 8 en direction de sa face aval. Le conduit présente en outre une seconde section ouverte sur la face aval du disque 8, qui forme un orifice de sortie 82. L'orifice de sortie 82 est généralement tronconique et s'évase à mesure qu'il s'approche de la face aval du disque 8. L'entrée 81 et la sortie 82 du disque 8 sont reliées l'une à l'autre par une section intercalaire 8 du conduit, généralement cylindrique. Le disque 8 se monte dans le corps 2 de la buse 1. À l'état monté, le disque 8 repose sur le fond de l'espace interne 23 du corps 2, par l'intermédiaire de sa face aval. Dans cet espace interne 23, la face aval du divergent 7, la face amont du disque 8 et la paroi 22 du corps 2 délimitent un espace sensiblement circulaire dont l'étendue selon l'axe XX' de la buse 1 correspond à une épaisseur référencée T.

On décrit maintenant un trajet du fluide à pulvériser au travers de la buse 1, de la face d'entrée 11 de cette dernière à sa face de sortie 12.

Le fluide pénètre dans la buse 1 au travers des orifices 42 du sur-couvercle 4. Le flux de fluide atteint l'espace sensiblement circulaire en périphérie de l'hélice 5. Le flux pénètre dans l'hélice 5 par les canaux d'admission 56 et gagne la chambre 54 de l'hélice 5 où le flux est mis en rotation. Le flux quitte l'hélice 5 par l'orifice de décharge 55.

Le flux sort de l'hélice 5 sous la forme d'un cône creux. Le flux pénètre alors dans le couvercle 3 par le conduit d'entrée 34 qui se trouve coaxial à l'orifice de décharge 55 de l'hélice 5. Au-delà du conduit d'entrée 34 du couvercle 3, le fluide gagne la chambre de décompression 35 de ce couvercle 3. Le jet s'y charge d'air en tourbillonnant. Le couvercle 3 transforme le jet de fluide qui entre sous la forme d'un cône creux de grand angle en un cône creux d'angle sensiblement inférieur. Du fait de l'absence de prise d'air directe sur le conduit d'entrée 34, il se crée une recirculation d'air dans ce conduit 34 qui va jusqu'à remonter dans l'hélice 5, contribuant ainsi à la formation d'un noyau creux dans le jet de fluide qui sort de cette hélice 5. Du fait de la présence du conduit d'entrée 34 en sortie de l'hélice 5, le jet de fluide en giration se trouve contraint à rester dans un angle limité par le diamètre D34 de ce conduit 34. L'angle au sommet du cône du jet de fluide qui traverse le couvercle 3 est compris entre 15 et 25 degrés. L'hélice 5 présente un angle de jet supérieur à ces valeurs. L'angle au sommet du jet en sortie du couvercle 3 importe peu ici : c'est en sortie du disque de décharge 8 que l'angle doit être conforme à la valeur visée. Les conduits d'admission 36 débouchent dans la chambre de décompression 35, en aval du conduit d'entrée 34. Du fait de l'écart entre le diamètre D34 du conduit d'entrée 34 et celui D35 de la chambre de décompression D35, le jet de fluide entre en contact avec les parois de cette chambre 35 dans une zone de celle-ci éloignée du conduit d'entrée 34. En amont de cette zone, la chambre 35 présente une zone libre de contact où les conduits d'admission 36 peuvent déboucher et y faire apparaître d'une dépression.

À la sortie de la chambre de décompression 35, le jet rencontre le divergent 7. Le mélange air-liquide emprunte les passages agencés tangentiellement à la chambre pour gagner une seconde chambre, laquelle correspond à l'espace sensiblement circulaire délimité latéralement par la paroi 22 du corps de buse 2 et compris entre la face aval du divergent 7 et la face amont du disque de décharge 8.

Le jet constitué d'un mélange air-liquide sortant du divergent 7 continue de girer dans cette seconde chambre et traverse le disque de décharge 8 de l'entrée 81 à la sortie 82. Le fluide s'y trouve accéléré et surviennent les phénomènes de désintégration qui donnent naissance à la formation d'un jet final, dont les caractéristiques de débit, d'angle et de taille de gouttes correspondent au jet cible.

On décrit maintenant comment dimensionner les principaux éléments fonctionnels qui constituent la buse 1.

On se fixe comme paramètre un débit normalisé pour la buse 1 (tableau 1, colonne I). Par exemple, on cherche à dimensionner la buse 1 de manière telle qu'elle puisse fonctionner dans la gamme de débits normalisée "01", code couleur "rouge" (tab. 1 : col. I,II ; 1. 3), soit environ 400 centimètres cubes par minutes (tab. 1 : col. III ; 1. 3).

L'hélice 5 est dimensionnée de manière à présenter un débit voisin de ce débit normalisé. Les dimensions en question concernent la section de ses canaux 56, ici leur largeur W56 et leur hauteur H56, et celle de l'orifice de décharge 55, ici son diamètre D55.

Les dimensions de l'hélice 5 sont déterminées de manière à :
(i) être les plus proches les unes des autres, et
(ii) supérieures au diamètre équivalent d'un orifice de calibration de buse de même débit et d'angle au sommet en sortie correspondant.

Les propriétés de l'orifice de calibration d'une buse de même débit, en particulier son diamètre, peuvent être obtenus des ouvrages, nombreux, qui traitent de ce sujet (cf. tableau 1, col. XIII).

À titre d'exemple uniquement, pour un débit ISO 03, la largeur W56 des canaux 56 de l'hélice 5 peut être voisine de 1,24 millimètre, leur hauteur H56 de 1,45 millimètre et le diamètre D55 de l'orifice de décharge de 1,50 millimètre.

L'usage d'une hélice du type de l'hélice 5 pour calibrer du débit de la buse 1 permet de réduire le risque de bouchage de cette buse 1 comparativement à un disque de calibration.

Le conduit d'entrée 34 du couvercle 3 est dimensionné de manière à maintenir la forme conique du jet sortant de l'hélice 5 et à réduire son angle au sommet. Les dimensions en question concernent le diamètre D34 du conduit d'entrée 34 et la longueur L34 de ce dernier. Le diamètre D34 du conduit d'entrée 34 du couvercle 3 est sensiblement supérieur au diamètre D55 de l'orifice de décharge 55 de l'hélice 5, et est déterminé en combinaison de la longueur L34 du conduit d'entrée 34 en question.

La chambre de décompression 35 du couvercle 3 est dimensionnée de manière telle que :
- son diamètre D35 soit sensiblement plus important que le diamètre D34 du conduit d'entrée 34, typiquement de 2 à 8 dixièmes au diamètre ;
- sa longueur L35 soit telle qu'un rapport du diamètre D35 de la chambre de décompression 35 sur la longueur L35 de cette chambre 35 soit supérieur à 0,5.

La valeur de ce rapport est choisie de manière telle que le jet entre en contact avec la paroi de cette chambre 35 une longueur suffisante pour créer une dépression en aval de cette chambre.

Par exemple, pour un débit ISO 03, le diamètre D55 de l'orifice de décharge 55 de l'hélice 5 est voisin de 1,50 millimètre, le diamètre D34 du conduit d'entrée 34 du couvercle 3 de 1,70 millimètre et le diamètre D35 de la chambre de décompression de 2,50 millimètres.

L'incidence verticale des passages tangentiels 713 du divergent 7, i.e. leur inclinaison relativement à l'axe XX' du divergent 7 peut être variable. Par souci de simplification, on peut adopter une inclinaison de 45 degrés de ces passages 713.

La section des passages tangentiels 713 est dimensionnée en combinaison de la section de l'orifice de sortie 82 du disque 8, de manière à amorcer la buse 1 dans le domaine de pression visé et maintenir l'état amorcé de la buse 1. Les expérimentations de la Demanderesse montrent que la valeur du rapport entre la section de passage de l'hélice de calibration 5 et celle des passages tangentiels 713 du divergent 7 est propre à chaque débit cible. La valeur de ce rapport varie entre 0,8 et 5. Par exemple, il est voisin de 1,40 pour un débit cible de ISO 03.

L'épaisseur T de la seconde chambre, entre la face inférieure de la section circulaire du divergent 7 et la face amont du disque 8 est adaptée de manière à maintenir la buse 1 à l'état amorcé sur l'étendue de pressions et de débits visée. Par exemple, cette distance est voisine de 1 millimètre.

En fonctionnement, l'hélice de calibration 5 et le venturi du couvercle 3 coopèrent pour former une dépression dans la chambre de décompression 35 entraînant l'apparition d'un écoulement continu (air-liquide) compatible avec les débits et gamme de pressions.

La Demanderesse a constaté que la configuration classique d'un venturi, où l'entrée d'air se trouve à proximité immédiate de la sortie de la pastille de calibration, si possible dans la zone de restriction du diamètre du jet à la sortie d'un conduit, en conservant un jet homogène et focalisé, n'est pas compatible avec l'utilisation d'une hélice de calibration comme c'est le cas ici. Une hélice de ce type produit un jet qui se désintègre avec un angle variable selon les dimensions choisies. Ici, l'hélice de calibration 5 est employée en combinaison d'un conduit d'entrée 34 qui éloigne la chambre de décompression 35 et les amenées d'air 36 de la sortie de l'hélice 5. En l'absence du conduit d'entrée 34, le jet quittant l'hélice 5 pourrait éclater contre la paroi de la chambre de décompression 35 et remonter au niveau des entrées d'air 36.

La présente dans la buse 1 d'une ou plusieurs pièces, ou portion de pièce, à effet de divergent augmente la giration du jet et son éclatement.

La présence d'une ou plusieurs pièces, ou portion de pièce, à fonction de décharge, comme la pastille 8 ici, concentre le jet dans la chambre amont. La pastille 8 permet de dimensionner la colonne d'air centrale au jet de liquide et d'influer sur la taille des gouttes produites et les caractéristiques du jet.

La buse 1 décrite ici, de sa face d'entrée à sa face de sortie, mesure au maximum 25 millimètres de long, au moins dans les configurations spécifiques aux plages de pressions ISO 0050 à 08.

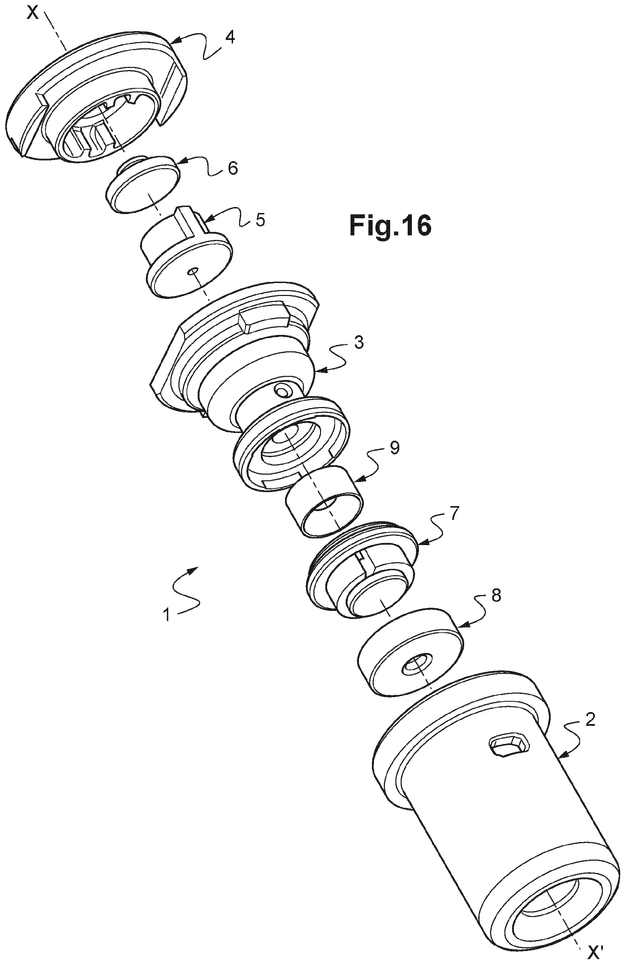

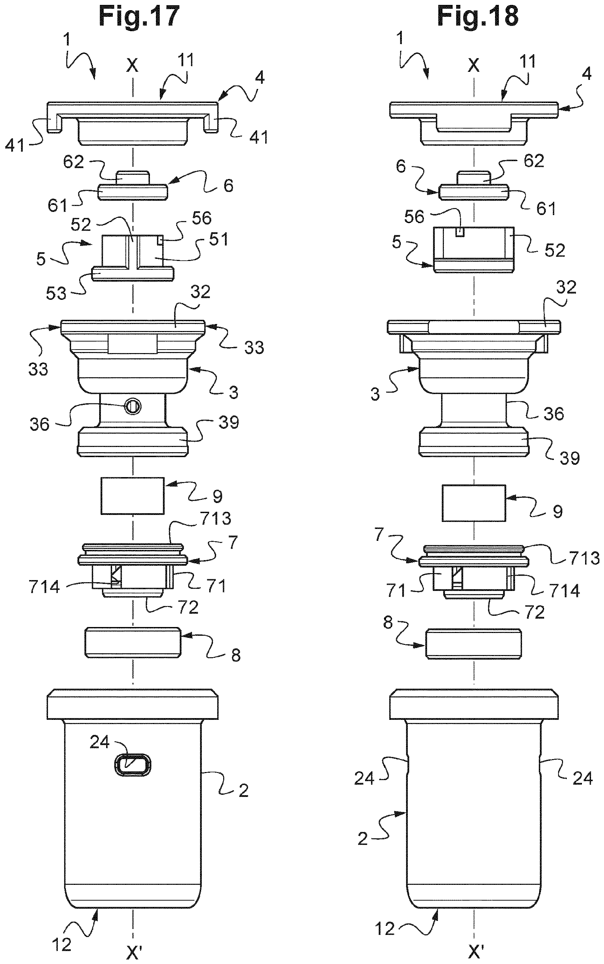

On fait référence aux figures, de la figure 16 à la figure 18.

Les éléments fonctionnellement équivalents à ceux des figures précédentes présentent des numéros de référence identiques.

Une buse de pulvérisation 1 analogue à celle décrite en relation avec ces figures s'en distingue en ce que la portion terminale du couvercle 3 est réalisée en une pièce distincte, ou sur-divergent 9. Le sur-divergent 9 est de préférence réalisé en céramique. Le sur-divergent 9 peut être facilement changé.

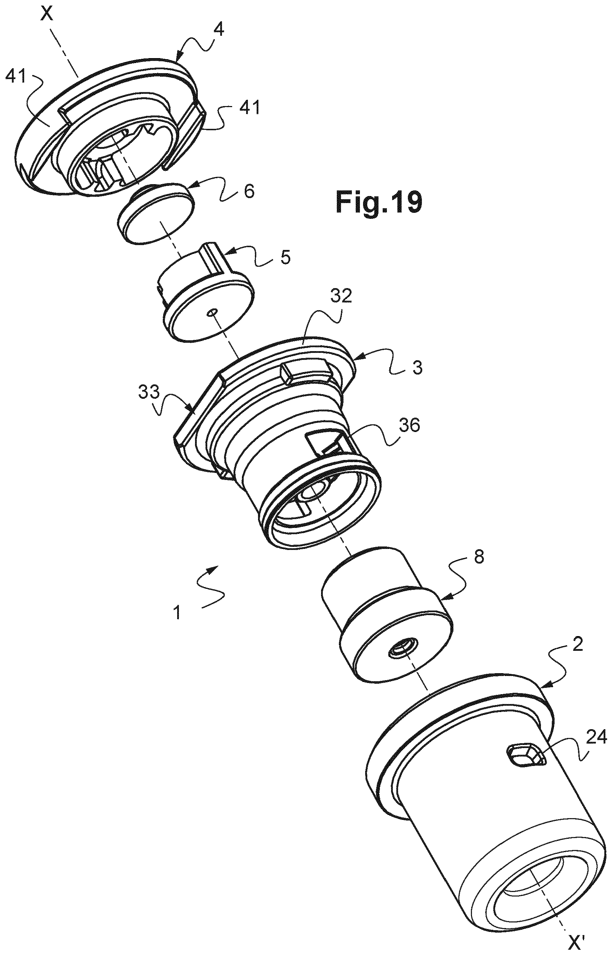

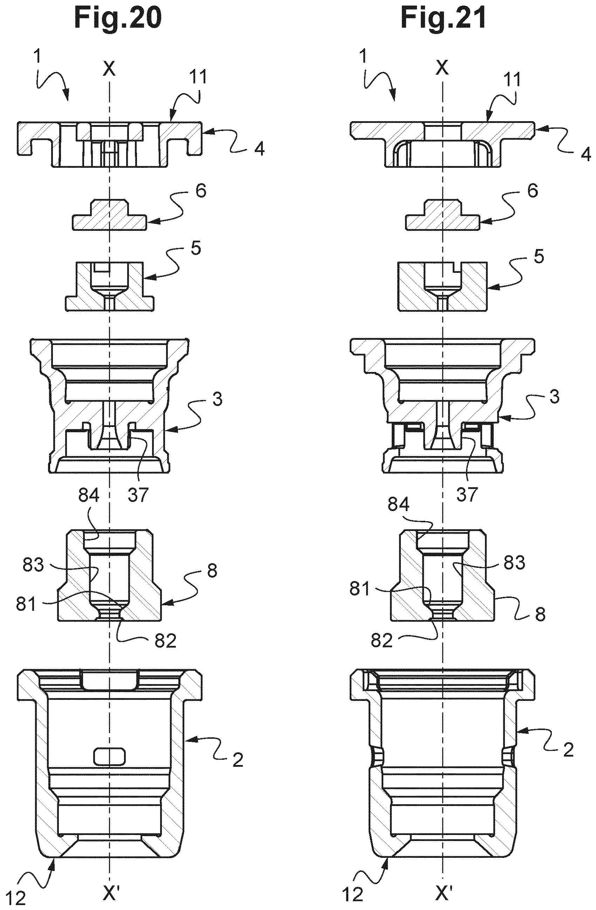

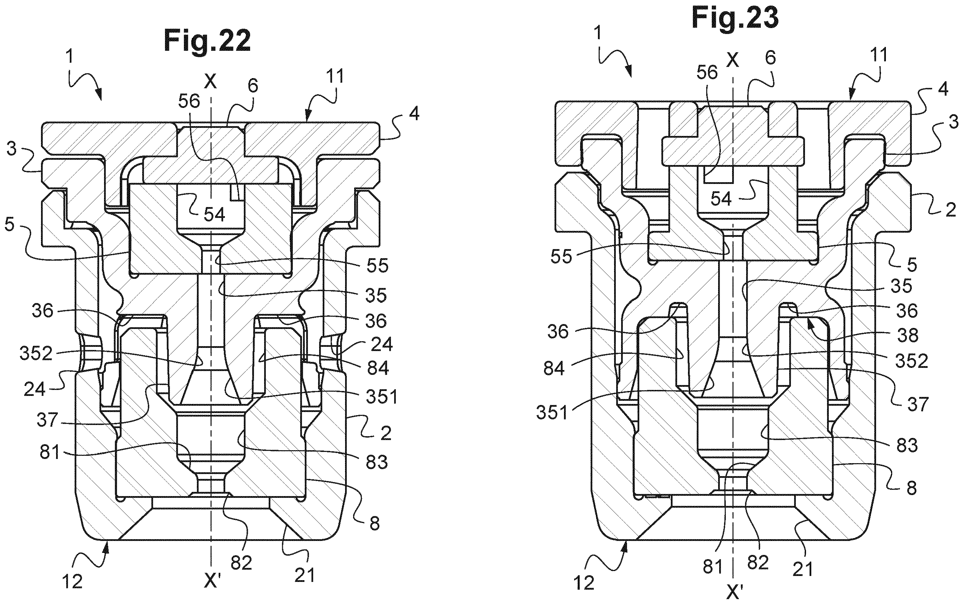

On fait référence aux figures, de la figure 19 à la figure 23.

La buse 1 est analogue à la buse décrite en relation avec les figures de la figure 1 à la figure 15, excepté, d'abord, que cette buse 1 est ici dépourvue de pièce analogue au divergent 7. En aval du couvercle 3, le jet de fluide qui quitte la tuyère 351 pénètre directement dans une pièce de décharge 8, d'allure généralement de révolution.

La présence d'une pièce, ou d'une partie de pièce, à fonction de divergent, dans la buse, comme c'est le cas pour les buses décrites en relation avec les figures précédentes, est optionnel.

On peut obtenir un éclatement du jet en sortie de la buse 1 sans pièce à fonction de divergent. Pour ce faire :
- on limite l'angle au sommet du jet en sortie de la buse 1 autour de 60 à 70 degrés ; et
- on maximise l'angle au sommet du jet sortant de la chambre de décompression 35, autour de 30 à 60 degrés, cet angle étant plus grand pour les petits débits, typiquement ISO 0050, et plus petit pour les débits plus grands, typiquement supérieurs à ISO 01 (tout en assurant la continuité avec la tuyère 351 grâce à un col 352 pour éviter toute perte de vitesse).

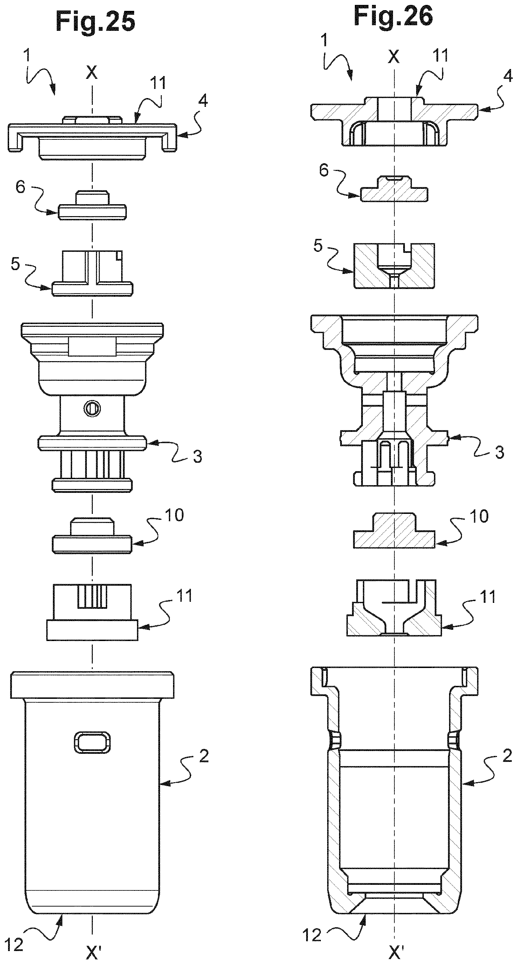

En l'absence de pièce à fonction de divergent dans la buse 1, comme dans les réalisation des figures 1 à 18 et 24 à 26, le jet en sortie de cette buse 1 présente un angle au sommet maximal qui correspond sensiblement à celui du jet à la sortie de l'hélice de calibration 5, mesuré en jet libre (isolé).

Un divergent sert à communiquer au jet de fluide qui le traverse la vitesse tangentielle qui peut lui manquer lorsque le rapport de l'angle au sommet du jet visé à la sortie de la buse 1 sur l'angle au sommet obtenu en sortie de la chambre de décompression 35 est important.

Sur une même configuration de buse, avec les mêmes pièces, à savoir une hélice de calibration 5, un couvercle 3 et une pastille de décharge 8, en conservant leur positionnement mutuel, la Demanderesse a observé que le jet en sortie de la buse 1 présente un angle au sommet qui peut augmenter de 25 degrés en l'absence de divergent à 60 degrés en sa présence (avec de l'eau comme le liquide de référence).

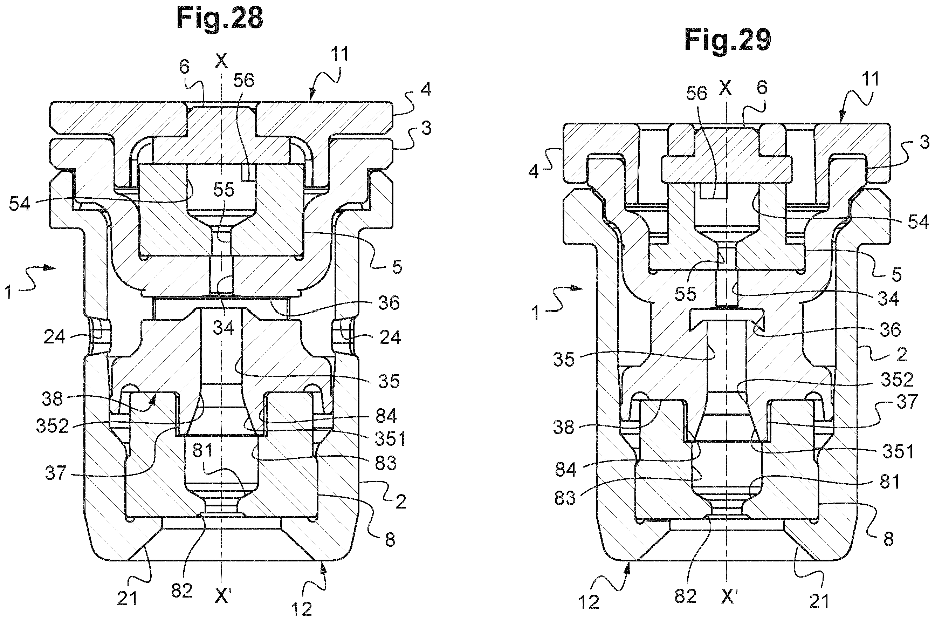

En l'absence de pièce à effet de divergent, comme dans les réalisations des figures 19 à 23 et 27 à 29 (décrites plus avant), on modifie le rapport du diamètre D35 de la chambre de décompression 35 sur la longueur L35 de celle-ci, ainsi que l'angle et la hauteur de la tuyère 351 du couvercle 3, avec son rayon de passage (col 352 entre la chambre de décompression 35 et la tuyère 351), pour évaser l'angle au sommet du jet, grâce à la tension superficielle . En plus de l'évasement de la tuyère 351, le fluide se ralentit du fait qu'il est chargé d'air et frotte contre les parois.

Dans cette configuration sans divergent, la pièce à fonction de décharge 8 se distingue du disque décrit en relation avec les modes de réalisation précédents en ce que cette pièce 8 intègre une chambre de décharge 83, en amont du cône de décharge 82.

Ici, le mélange entre l'air extérieur et le jet de liquide se fait à la sortie du couvercle 3, en aval de la tuyère 351. Cet air est amené par deux larges ouvertures 36 dans le couvercle 3, lesquelles débouchent au voisinage du segment cylindrique 37 du couvercle 3.

La pièce 8 à fonction de décharge est partiellement reçue dans le couvercle 3, de manière telle que la face amont de cette pièce 8 s'appuie contre la surface d'appui 38 du couvercle 3. À cet effet, la pièce 8 est dotée d'un orifice d'entrée 84, ouvert sur la face amont de la pièce 8 et qui découche dans la chambre 83. L'orifice d'entrée 84 de la pièce à effet de décharge loge, en partie au moins, le segment cylindrique 37 du couvercle 3. Le mélange entre l'air et le jet de fluide qui quitte la tuyère 351 survient dans le conduit d'entrée 84 de la pièce 8, juste en amont de la chambre de décharge 83.

Le couvercle 3 est alors dépourvu de conduit du type du conduit d'entrée 34 décrit en relation avec les précédents mode de réalisation. Le conduit de décharge 55 de l'hélice de calibration 5 débouche directement dans la chambre de décompression 35 du couvercle 3.

La buse selon l'invention peut être dépourvue de pièce à fonction de décharge telle que le disque 8 et de pièce à effet de divergent, telles que décrites en relation avec les figures précédentes. Les dimensions de la tuyère 351, y compris son col 352, sont alors adaptées de manière à produire en sortie de buse un jet conique dont l'angle au sommet est compris entre 15 et 40 degrés. Dans ce cas, le corps 2 est optionnel. La face de sortie 12 de la buse peut correspondre à une face aval du couvercle 3. La buse produit un spectre de gouttes intermédiaires (catégorie "M") à grossières (catégorie "C"), et significativement plus importantes que le spectre de l'hélice 5 isolée.

En l'absence de divergent, la vitesse tangentielle du fluide dépend exclusivement de l'angle de jet en sortie de l'hélice de calibration 5, du diamètre D34 du conduit d'entrée 34 du couvercle 3, lorsqu'il existe, et du diamètre D35 de la chambre de décompression 35 de ce couvercle 3, ainsi que des dimensions de l'évasement de la tuyère 351. Une telle configuration favorise des tailles de gouttes intermédiaires. La présence d'un divergent ajoute une perte de charge interne tout en stabilisant les vitesses de sortie. On peut atteindre une pression minimale de travail de 5 à 6 bar alors que cette pression peut se situer entre 3.5 et 5 bar en l'absence de divergent.

D'autres avantages liés à l'absence de divergent sont, en particulier dans le cas de petits débits :
- un diamètre de décharge plus petit qu'avec l'emploi d'un divergent (réduction de 0,1 à 0,5 millimètre) ;
- moins de composant d'usure à apparier ;
- une buse plus compacte ;
- un entretien facilité.

De même, le divergent pourra posséder ou non un orifice central. La présence ou non d'un orifice central aura pour conséquence de modifier la perte de charge provoquée par la giration du flux de sortie de la chambre de décompression. En la réduisant, elle permet d'enclencher le venturi à une pression plus basse. Cela devient également un élément à prendre en compte pour gérer la taille des gouttes du jet de sortie de buse. La forme interne du divergent pourra être complétée par la forme décrite dans EP 2 952 261 A1.

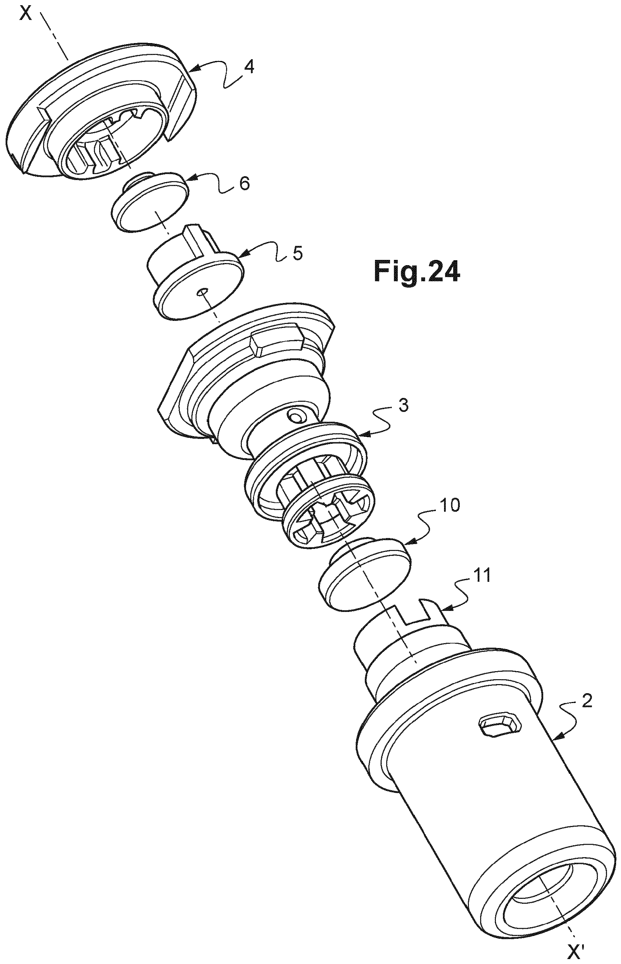

Dans le mode de réalisation de la figure 24 à la figure 26, les passages du couvercle 4 sont surdimensionnés en sorte que le couvercle 3 se trouve privé de son rôle d'accélérateur du flux. La buse 1 est équipée d'une hélice en tant que pièce à fonction de décharge. L'hélice de décharge 8 est agencée de manière à accélérer le flux de fluide avant sa pulvérisation à l'orifice de sortie 21.

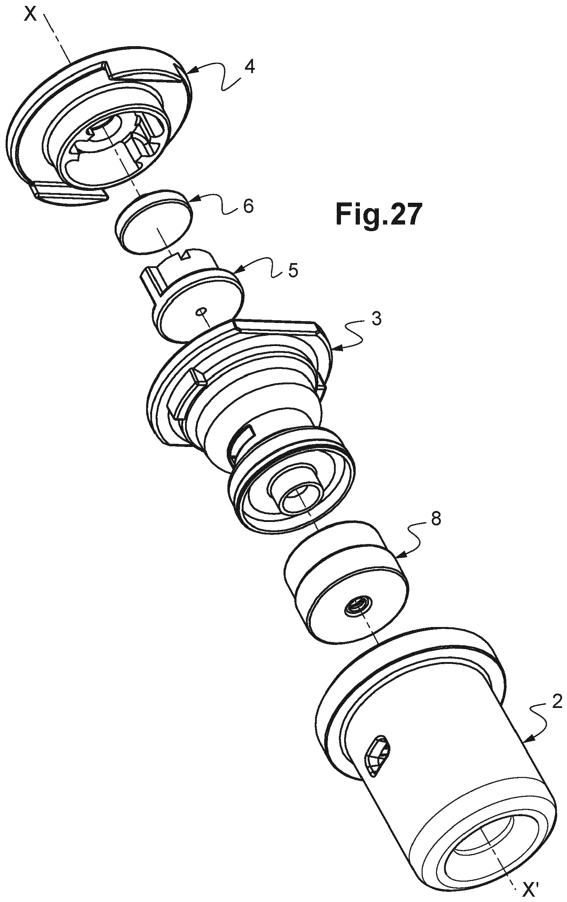

On fait référence aux figures, de la figure 27 à la figure 29.

Dans ce mode de réalisation, la buse 1 se distingue de la buse décrite en relation avec les figures 19 à 23 en ce que le couvercle 3 est équipé d'un conduit d'entrée 34 en amont de la chambre de décompression 35. L'air extérieur parvient à l'entrée de cette chambre de décompression 35 par l'intermédiaire d'une large lumière 36 qui traverse diamétralement le couvercle 3, en une position axiale telle que cette lumière 36 rencontre le conduit central du couvercle 3 entre la sortie du conduit d'entrée 36 et l'entrée de la chambre de décompression 35. Cette lumière 36 est plus large que le diamètre D35 de la chambre de décompression 35 en sorte que cette lumière interrompt le conduit central du couvercle 3 entre le conduit d'entrée 34 et la chambre de décompression 35.

La lumière 36 remplace les ouvertures prévues dans le mode de réalisation des figures 19 à 23.

Quel que soit le mode de réalisation de la buse selon l'invention, les pièces les plus sensibles à une usure provoquée par le frottement de particules en suspension dans le fluide à vaporiser au moins sont de préférence réalisées en céramique. Il s'agit en particulier de l'hélice de calibration 5 et son tampon ou divergent, la portée conique de fermeture du divergent sur le couvercle ainsi que les canaux et le disque de décharge.

Selon l'invention, l'on associe dans une buse du type de la buse 1 décrite en relation avec les figures une pièce à fonction de giration, ou hélice (aussi désignée par son équivalent anglais "swirl" dans la technique), aux éléments classiques d'une buse à aspiration d'air. L'hélice est disposée en amont d'un noyau, ou couvercle, à fonction de mélanger le liquide à pulvériser avec de l'air. L'hélice est agencée de manière à calibrer le débit du fluide traversant la buse, éventuellement avec tampon. Les buses classiques, par exemple du type décrit dans EP 2 952 261 A1, comprennent au contraire une pastille ou un disque en tant que pièce de calibration du jet (référence 5 ou 33).

Les canaux et l'orifice de sortie d'une buse à cône creux sont de dimensions égales ou supérieures à celles du passage d'une pastille de débit équivalent. Pour les buses de ce type, on définit un facteur de filtration correspondant au rapport de la taille de maille utilisée pour l'élément filtrant sur le diamètre de l'orifice de calibration. Pour une buse selon l'invention, on peut définir le facteur de filtration comme le rapport de la taille de maille sur la largeur du passage de fluide le plus étroit de l'hélice.

Dans le tableau 1 sont rassemblées des valeurs du rapport de filtration pour des buses selon l'invention (col. IX) en liaison, à chaque fois, avec la valeur du rapport de filtration pour une buse classique (col. VI) de débit équivalent (col. I, III). Une comparaison des facteurs de filtration relatifs aux buses classiques (col. VI) et aux buses proposées (col. IX) fait apparaître une plus grande homogénéité de ces facteurs, qu'avec une pastille de calibration (col. XIII). Cette homogénéité est basée sur le gain en largeur des canaux d'admission 56 de l'hélice 5, qui est la plus petite dimension de passage du fluide. L'homogénéité permet d'étendre la plage utile des filtres.

Le tableau 1 rassemble également des valeurs de gain dimensionnel, concernant un élargissement des canaux de l'hélice de calibration, en largeur (col. X) et hauteur (col. XI), et de l'orifice de décharge de celle-ci (col. XII) par rapport au diamètre d'une pastille de calibration de débit équivalent (col. XIII).

La comparaison des facteurs de filtration des buses classiques (col. VI) et de la buse proposée (col. IX) montre qu'il est possible, pour les gammes de débits (col. I) inférieures à 015 (1. 1 à 3), d'utiliser un filtre plus grossier avec la buse proposée, sans augmenter le risque de bouchage par rapport à un filtre plus fin utilisé avec une buse classique. Pour la gamme de débits 0050 (tableau 1, 1. 1) par exemple, le facteur de filtration de la buse proposée (col. IX : 0,24) est supérieur à celui d'une buse classique (col. VI : 0,15), alors que la buse proposée est associée à un filtre plus grossier (col. VII : mesh 100) que la buse classique (col. III : mesh 200). La buse proposée permet l'usage d'un filtre de taille supérieure sans augmenter le risque de bouchage de cette buse, c'est-à-dire un filtre moins sujet au bouchage.

Les buses adaptées à des débits plus importants, au-delà de la gamme 02 (1. 5 à 11), ne présentent pratiquement aucun risque de bouchage.

**Tableau 1**

| | I | II | III | IV | V | VI | XIII |
|---|---|---|---|---|---|---|---|
| 1 | 0050 | Violet | 200 | 200 | 0,074 | 0,15 | 0,5 |
| 2 | 0075 | Rose | 300 | 200 | 0,074 | 0,12 | 0,6 |
| 3 | 01 | Orange | 400 | 100 | 0,15 | 0,21 | 0,7 |
| 4 | 015 | Vert | 400 | 80 | 0,2 | 0,23 | 0,9 |
| 5 | 02 | Jaune | 600 | 80 | 0,2 | 0,2 | 1,0 |
| 6 | 025 | Lilas | 800 | 50 | 0,36 | 0,32 | 1,1 |
| 7 | 03 | Bleu | 1000 | 50 | 0,36 | 0,29 | 1,2 |
| 8 | 04 | Rouge | 1200 | 50 | 0,36 | 0,25 | 1,5 |
| 9 | 05 | Marron | 1600 | 50 | 0,36 | 0,23 | 1,6 |
| 10 | 06 | Gris | 2000 | 50 | 0,36 | 0,21 | 1,7 |
| 11 | 08 | Blanc | 2400 | 50 | 0,36 | 0,18 | 2,0 |

**Tableau 2**

| | I | VII | VIII | IX | X | XI | XII |
|---|---|---|---|---|---|---|---|
| 1 | 0050 | 100 | 0,15 | 0,24 | 27 | 51,6 | 66 |
| 2 | 0075 | 100 | 0,15 | 0,24 | 20 | 43,3 | 56,7 |
| 3 | 01 | 80 | 0,2 | 0,22 | 11,3 | 33,8 | 46,5 |
| 4 | 015 | 80 | 0,2 | 0,19 | 5,7 | 26,4 | 37,9 |
| 5 | 02 | 80 | 0,2 | 0,19 | 8 | 30 | 25 |
| 6 | 025 | 50 | 0,36 | 0,31 | 4,5 | 25 | 20,5 |
| 7 | 03 | 50 | 0,36 | 0,29 | 0 | 20,2 | 15,3 |
| 8 | 04 | 50 | 0,36 | 0,25 | 0,3 | 20,4 | 4,5 |
| 9 | 05 | 50 | 0,36 | 0,23 | -0,6 | 19 | 3,8 |
| 10 | 06 | 50 | 0,36 | 0,22 | -4 | 14,9 | 0 |
| 11 | 08 | 50 | 0,36 | 0,19 | -9,9 | 8,1 | -6 |

| | | | | | | | |
|---|---|---|---|---|---|---|---|
| I : gamme de débits selon la norme ISO 10625:2005, II : code couleur pour l'identification de la buse selon cette norme, III : débit normalisé à 3 bars, en centimètre cube par minute, IV : filtration classiquement utilisée, taille de mesh, V : filtration classiquement utilisée, taille de la maille, en millimètre, VI : facteur de filtration classiquement utilisé, VII : filtration utilisée avec la buse selon l'invention, taille de mesh, VIII : filtration utilisée avec la buse selon l'invention, taille de la maille, en millimètre, IX : facteur de filtration utilisé avec la buse selon l'invention, X : grossissement des canaux de l'hélice, en largeur, relativement (pour cent), XI : grossissement des canaux de l'hélice, en hauteur, relativement (pour cent), XII : grossissement de l'orifice de décharge, en diamètre, (pour cent), XIII : diamètre d'orifice de passage d'une pastille de calibration de débit équivalent. | | | | | | | |

La buse est constituée de pièces démontables en vue d'un entretien de nettoyage. La préhension peut se faire à partir de la collerette de buse composée de trois parties appartenant à chacune des pièces plastiques de la buse : le sur-couvercle, le couvercle et le corps de buse. L'hélice de calibration, le tampon ou le divergent et la pastille de décharge sont de préférence en céramique. Le cas échéant, le sur-divergent est lui aussi réalisé en céramique.

On a décrit une pièce 7 à fonction de divergent munie de quatre canaux. Le nombre de canaux du divergent 7 influe sur la taille des gouttes. Il convient généralement que le nombre de canaux soit compris entre 2 et 4. Ici, le divergent 7 présente 4 canaux ce qui optimise la vitesse du fluide.

On a décrit une hélice 5 en tant que pièce à fonction de giration munie de deux canaux d'entrée 56. On peut envisager une hélice présentant un nombre différent de canaux.

La jonction entre la chambre de décompression 35 et la tuyère 351 prend la forme d'un col 352, dont le rayon peut être adapté pour améliorer les caractéristiques du jet de fluide.

La buse selon l'invention peut être dépourvue de pièce à fonction de décharge telle que le disque 8 décrit en relation avec les figures précédentes. Les dimensions de la tuyère 351, y compris son col 352, sont alors adaptées de manière à produire en sortie de buse un jet conique dont l'angle au sommet est compris entre 15 et 40 degrés. Dans ce cas, le corps 2 est optionnel. La face de sortie 12 de la buse peut correspondre à une face aval du couvercle 3. La buse produit un spectre de gouttes intermédiaires (catégorie "M") à grossières (catégorie "C"), et significativement plus importantes que le spectre de l'hélice 5 isolée.

## Revendications

1. Buse de pulvérisation (1) à jet conique, du type comprenant
- un corps (2), de forme généralement axisymétrique, avec une zone d'entrée (11) pour du liquide et une sortie (12), et
- un noyau (3), au moins partiellement logé dans le corps (2), agencé de manière à mélanger le liquide qui le traverse avec de l'air, en amont de la sortie (12), **caractérisé en ce que** la buse (1) comprend en outre une pièce additionnelle (5), disposée en aval de la face d'entrée (11) et en amont du noyau (3), cette pièce additionnelle (5) étant agencée de manière à mettre un jet de liquide en giration autour de l'axe (XX') du corps (2).

2. Buse selon la revendication 1, dans laquelle la pièce additionnelle (5) comprend une chambre (54), présentant une forme de révolution, et au moins un canal d'admission (56) pour du liquide, chaque canal d'admission (56) débouchant dans la chambre (54) de manière tangentielle.

3. Buse selon la revendication 2, dans laquelle la pièce additionnelle (5) comprend en outre un conduit de décharge (55), dans lequel débouche la chambre (54) de manière axiale, et ce conduit de décharge (55) présente des dimensions en section transversale supérieures chacune aux dimensions en section transversale de chacun des canaux d'admission (56).

4. Buse selon l'une des revendications 2 et 3, dans laquelle chaque canal d'admission (56) de la pièce additionnelle (5) présente des dimensions en section transversale supérieures chacune au diamètre d'une pastille de calibration de débit équivalent.

5. Buse selon la revendication 4, dans laquelle chaque canal d'admission (56) de la pièce additionnelle (5) présente en section transversale une dimension minimale, et cette dimension minimale est supérieure au diamètre de la pastille de calibration de débit équivalent, de dix pour cent au moins.

6. Buse selon l'une des revendications précédentes, dans laquelle le noyau (3) présente une chambre de décompression (35), capable de mélanger un jet de liquide à de l'air ambient, et au moins un conduit d'admission (34) pour le liquide, qui débouche dans cette chambre de décompression (35), le noyau (3) étant disposé relativement à la pièce additionnelle (5) de telle manière que le conduit d'admission (34) de ce noyau (3) soit coaxial à une sortie de la pièce additionnelle (5).

7. Buse selon la revendication 6, dans laquelle le conduit d'admission (34) du noyau (3) présente des dimensions en section transversale inférieures à celles de la chambre de décompression (35).

8. Buse selon la revendication 7, dans laquelle le conduit d'admission (34) du noyau (3) présente des dimensions en section transversale supérieures à celles de la sortie de la pièce additionnelle (5).

9. Buse selon l'une des revendications 6 à 8, dans laquelle les dimensions de la section transversale du conduit d'admission (34) du noyau (3) et une longueur de ce conduit (34) sont choisies conjointement de manière à maintenir un angle de jet en sortie (12) proche de 30 degrés.

10. Buse selon l'une des revendications précédentes, dans laquelle le noyau (3) comprend en outre une conduite de sortie (351), qui s'évase à la manière d'une tuyère le long de l'axe (XX') du corps (2), cette conduite de sortie (351) étant dimensionnée de manière à augmenter l'évasement du fluide.

11. Buse selon l'une des revendications précédentes, la buse étant dépourvue de pièce à fonction de canaliser une vitesse tangentielle du liquide, au moins en aval du noyau (3), et comprenant en outre une pièce de décharge (8), logée dans le corps (2), en aval du noyau (3) et en amont de la sortie (12).

12. Buse selon la revendication 11, dans laquelle la pièce de décharge (8) comprend une chambre allongée (83), cette chambre (83) présente des dimensions en section transversale et une longueur adaptées en fonction d'un angle de jet souhaité à la sortie (12).

13. Buse selon l'une des revendications 1 à 10, comprenant en outre une seconde pièce additionnelle (7), à fonction de canaliser une vitesse tangentielle du fluide dans le jet, la seconde pièce additionnelle (7) étant logée dans le corps (2), en aval du noyau (3).

14. Buse selon la revendication 13, comprenant en outre une pièce de décharge (8) en forme de disque, en aval de ladite seconde pièce additionnelle (7), cette pièce de décharge (8) étant logée dans le corps (2) de manière qu'un espace soit ménagé, dans ledit corps (2), entre la seconde pièce additionnelle (7) et le disque de décharge (8).

15. Buse selon la revendication 14, dans laquelle ledit espace s'étend sur une distance (T) suivant l'axe (XX') du corps (2) voisine de 1 millimètre.

16. Buse selon l'une des revendications 1 à 10, la buse étant dépourvue de pièce de décharge (8) et de pièce à effet de canaliser une vitesse tangentielle du fluide dans le jet, dans laquelle le noyau (3) comprend une partie formant tuyère (351 ; 352) et les dimensions de cette tuyère sont adaptées de manière à produire en sortie (12) un jet conique dont l'angle au sommet est compris entre 15 et 40 degrés.
